# EUROPEAN PATENT APPLICATION

(11) **EP 4 631 836 A1**
(43) Date of publication of application: **15.10.2025**
(21) Application number: 25168934.5
(22) Date of filing: 07.04.2025
(51) Int. Cl.: B62K 3/04, B62M 9/16, B62K 25/08, B62K 25/28, B62M 9/00

(54) **AN ACCESSORY FOR REDUCING PEDAL KICKBACK IN MTB BICYCLES**

(30) Priority: 09.04.2024 IT 202400007888
(71) Applicant: EGIDA S.R.L. O, IN FORMA ABBREVIATA, EG S.R.L., 20124 Milano (IT)
(72) Inventor: BOTTI, Ermanno, 21025 Comerio (VA) (IT)
(74) Representative: Botti & Ferrari S.p.A.

(57) **Abstract**

The invention relates to a removable accessory for lowering or reducing pedal kickback in MTB bicycles comprising at least a frame, two wheels, one front and one rear, a suspension of the rear wheel, a crankset with at least one front sprocket (10) and rear sprocket set to accommodate a chain (15) drive between the front sprocket (10) and at least one said rear sprocket. This accessory includes:
- a supporting plate having, at one of its long sides, at least two holes or notches for the passage of means of attachment in corresponding receiving seats arranged around the crankset of the bicycle;
- a pulley mounted swiveling on a transverse pin attached near a free end of the plate that is cantilevered upward a direction in which the pulley is engageable in the chain (15) when the plate is mounted on the bicycle and essentially widening the closed ring of the chain.

## Description

### Scope of the application

In its most general aspect, the present invention relates to an accessory for cancelling or abating pedal kickback in MTB bicycles.

The present invention also covers a dual suspension MTB bicycle equipped with the above accessory.

More specifically, the present invention relates to a removable accessory mounted on a portion of the bicycle frame.

### Prior Art

As is well known in this specific technical field, Pedal Kickback, also known as pedal feedback, is a behavior the crank has when the sprocket carriage tenses and pulls the chain, particularly in "full" or dual suspension MTB bicycles. The chain pull, by counteracting this compression action, causes the cranks to rotate back, even tens of degrees, and consequently the pedals as well.

Mountain bikers have certainly experienced this firsthand and live with it, meaning that they endure this inconvenience especially at low gait speeds.

In contrast, for Enduro or Downhill enthusiasts, pedal kickback is a serious and even unbearable nuisance.

More specifically, this phenomenon occurs during slopes and when the bike is proceeding propelled by an already acquired momentum, such as in pedaling stasis, and the suspension is absorbing bumps. In general, the phenomenon occurs in all cases where there is movement of the bike body or when the chain jumps due to a bump, even at low speeds.

Basically, when the rider or biker proceeds by loading his or her weight on the pedals and when the rear suspension is compressed, traction is generated on the pedals, causing them to rotate backward.

Still in other words, the phenomenon of kickback at the pedals is a behavior that the transmission takes on when the bike comes into contact with the roughness of the ground. The phenomenon occurs when the movement of the bike's rear axle increases the distance between the chain contact point on the chainring and the chain contact point on the rear sprocket engaged

Chain pull affects the efficiency of the rear suspension to the point that, as counterevidence, it has been observed that in a chainless bicycle, that is, with no transmission, the shock absorber and the carriage work unconstrained by each other, making the bike smoother.

Basically, when a wagon compression event happens, the chain is pulled due to pedal kickback, reducing the smoothness of the shock during compression and return, and this results in a slight and unintentional backward rotation of the cranks, forcing the rider to oppose force on the pedals and sometimes having to adjust the position of the legs.

Even at low speeds the problem can be very pronounced and when the kickback happens, the bicycle seems to lock up and in the worst cases you may even lose control.

Many MTB manufacturers have proposed technical solutions with the aim of abating or at least reducing the phenomenon of pedal kickback.

For example, an early solution proposed in 2014 was to equip an MTB with an incomplete sprocket pack, i.e., skipping a chainring, in order to create a kind of neutral gear, useful on descents to release the chain from normal pulling operation.

However, this solution has not found much acceptance among riders who do not find it very functional.

A more effective solution is the O-Chain system, described for example in PCT International Patent Application No. WO 2020/192177 A1. This solution provides a compensation device that allows relative rotation between the chainring and crankset cranks and such that the rear shock travel is compensated.

While advantageous in several respects, and basically fulfilling its purpose, this solution is particularly complex and expensive in its implementation and also requires regular and costly maintenance.

Another known technical solution is described in U.S. Patent Application No. US 2003/0060316 Alwhich suggests the use of a boomerang plate mounted around the center crankset of the bicycle and providing at both ends two rollers on which the chain can slide. This solution, however, works by compressing the chain extension in the direction of the hub (Figgs 7, 8 and 9) and effectively tightening the closed loop of the chain by reducing its ability to expand in the event of a bicycle jerk.

Other solutions of the known technique are described, for example, in U.S. Patent Application No. US 2012/0142469 A1 or U.S. Patent Application No. US 2014/0051535 A1, both of which describe plates mounted around the bicycle crankset and fitted at one end with a deflection pulley from the natural path of the chain.

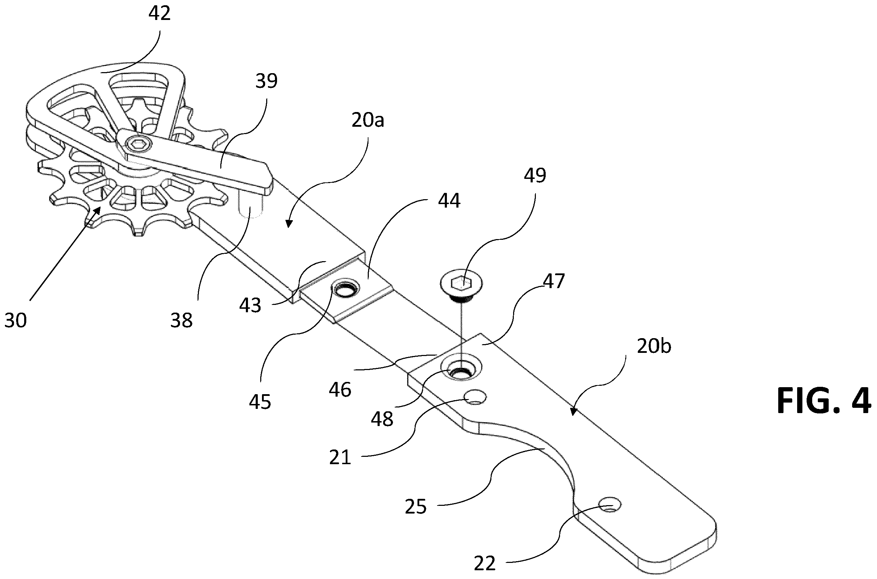

As in the previous case, these solutions also work by compressing the chain (Fig. 4 or Fig. 12) and tightening the closed link of the chain. All of these known solutions have proven to be not particularly effective in eliminating kickback to the pedals.

The first purpose of the present invention is to solve the problem of pedal kickback, particularly in MTBs, by overcoming the drawbacks and limitations that still plague the solutions proposed by the known art.

Another purpose of the invention is to provide a universal accessory likely to be fitted to an MTB-type bicycle subsequent to its sale.

An additional purpose of the invention is to provide a simple and reliable technical solution involving low maintenance.

Another purpose of the invention is to be able to associate the accessory, by mounting it in a removable way as well, with various types and brands of MTB bicycles, thus making it universal.

Finally, one purpose of the invention is also to provide a solution that is optimized in terms of ease of production at relatively low cost.

### Summary of the Invention

The solution idea behind the present invention is to provide for a tiled support that can be constrained by means of fastening means to accommodating housings already present on MTB bicycles, such as around the crankset of the drive system; this support having a free end extended cantilevered and projecting upward as well as accompanied with a transverse pin supporting an idler pulley on which the chain can be engaged so as to facilitate a widening of the closed chain link.

Based on this solution idea, the technical problem of the present invention is solved by a removable accessory for lowering or reducing pedal kickback in MTB bicycles comprising at least one frame, two wheels, one front and one rear wheel, a rear wheel suspension, a crankset with at least one front sprocket and a rear sprocket set to accommodate a drive chain between the front sprocket and at least one of said rear sprockets, particularly for Enduro practice, said accessory comprising:
- a support plate having, at one of its long sides, at least two holes or slots for the passage of means of attachment into receiving seats arranged around the bicycle crankset;
- a pulley mounted swiveling on a transverse pin attached near a free end of the plate; characterized by the fact that:
- said free end is cantilevering upward a direction in which the pulley is engaged in the chain when the plate is mounted on the bicycle substantially widening the closed loop of the chain.

Advantageously, the aforementioned plate has the long side of slightly curved hole proximity and is inserted between crankset and frame partially wrapping around the crankset bottom bracket seat.

The holes in the plate are slotted.

A protection system including two flanges parallel and lateral to the pulley is also provided to prevent chain derailment during use of the attachment.

In addition, it is noteworthy that the plate is structured with two portions mounted together with a tenon-and-mortise type quick-connect coupling.

One such portion is the one that carries the transverse pin attached near the free end of the plate on which mounted swivels said pulley.

At least one means of attachment shall be provided to stably bind said portions of the plate together.

The pulley has a number of teeth less than or equal to twelve, and the plate thickness is between three and six millimeters.

The invention also relates to a dual-suspension MTB bicycle for Enduro that incorporates an accessory according to any of the attached claims 1 through 9.

Further features and advantages of the accessory according to the present invention will result from the description, made below, of a preferred example of implementation given as an indication and not as a limitation with reference to the attached figures.

### Brief description of the figures

Figure 1 shows a schematic and side view of a "full" type MTB bicycle, i.e., dual suspension to which the accessory according to the invention can be applied;

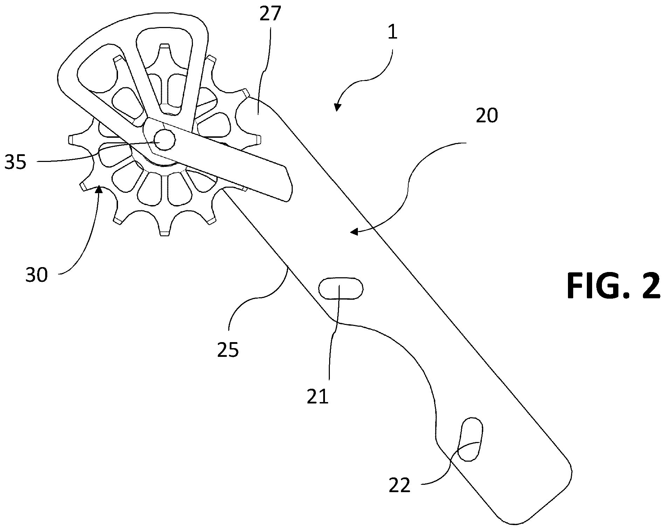

Figure 2 represents a front schematic view of an accessory made according to the present invention to abate or reduce the phenomenon of pedal kickback in MTB bicycles;

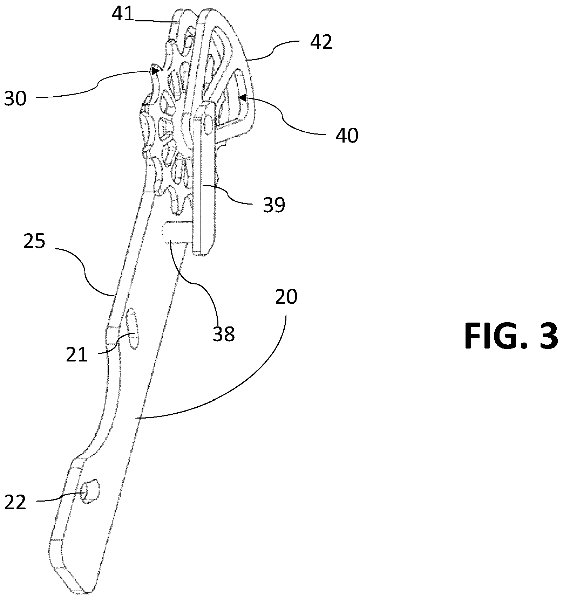

Figure 3 represents a schematic side view of the accessory made according to the present invention;
Figure 4 shows a perspective and schematic view of a second example of making the accessory of Figures 2 and 3;

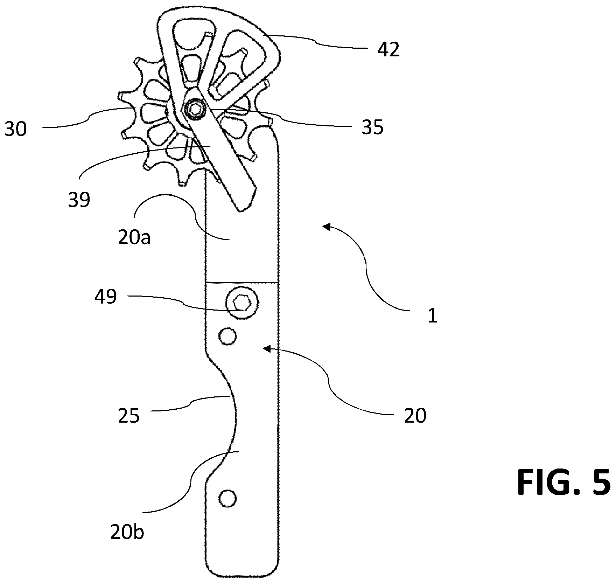

Figure 5 shows a front view of the accessory according to the invention in the embodiment form of Figure 4;
Figure 6 shows a detached-part perspective view of a portion of a bicycle on which the accessory according to the invention is mounted;

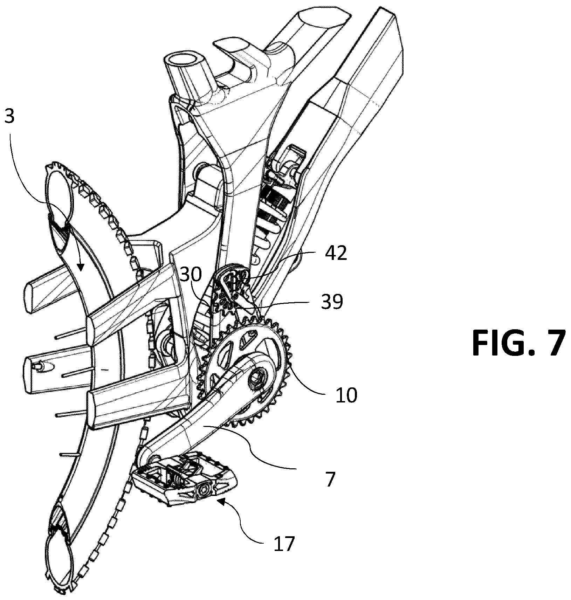

Figure 7 shows a perspective view of a portion of a bicycle on which the accessory according to the invention has been mounted;

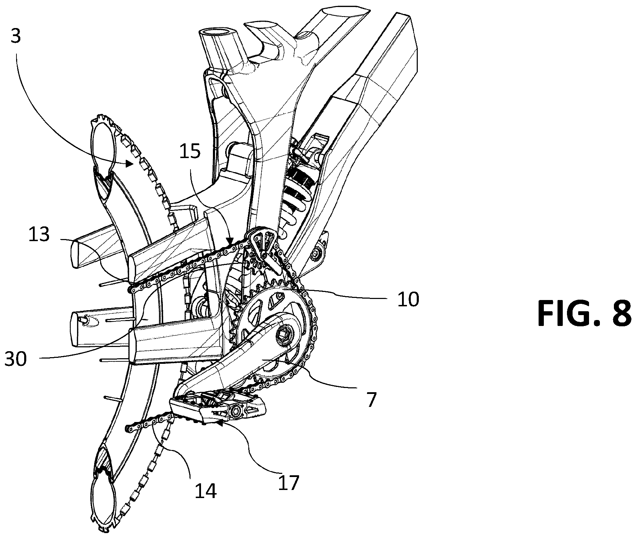

Figure 8 shows a perspective view of a portion of a bicycle equipped with the accessory of the present invention and on which a drive chain is also mounted.

### Detailed description

With reference to the attached figures, 1 is globally and schematically denoted a MTB bicycle accessory made according to the present invention to cancel, reduce or abate pedal kickback in MTB bicycles.

More specifically, but not exclusively, the accessory of the invention is intended for MTB bicycles of the "full" type, that is, equipped with dual suspension, front and rear.

Also, again not exclusively, the accessory of the present invention has particular application for MTB bicycles intended for Enduro or Downhill riding.

To better understand all aspects of the invention, let us first examine the structure of a MTB bicycle on which this accessory 1 can be removably mounted.

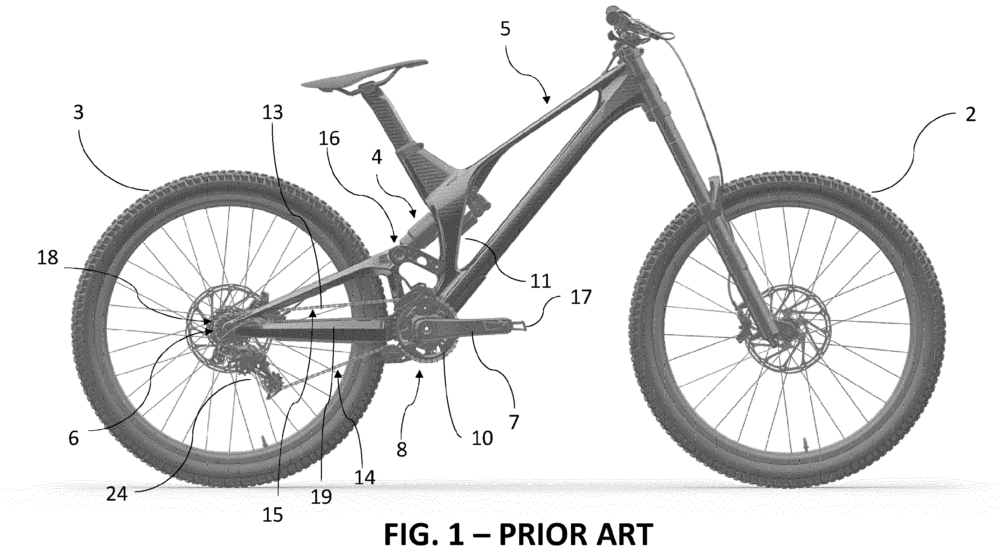

Figure 1 shows a bicycle to which the accessory according to the present invention can be applied, shown as a whole with reference number 100.

Bicycle 100 includes a frame 5, a front wheel 2, a rear wheel 3, a suspension system 4 of the rear wheel 3, a transmission system 6 to place the rear wheel 3 in rotation by means of a so-called crankset 8 conventionally mounted on a so-called bottom bracket 12 received in a seat of the frame 5.

Crankset 8 is the assembly consisting of two cranks, right 7 and left 9, with corresponding pedals 17, 19, and at least one front sprocket 10. Crankset 8 is mounted on the so-called bottom bracket 12 of the bicycle 100 frame 5 and also includes a torque transmission shaft or pivot.

Bottom bracket 12 includes ball bearings, not shown as conventional, as well as the center pivot connecting cranks 7 and 9 and integral with crankset 8.

The drive system 6 includes, in addition to the crankset 8, a hub and rear sprocket assembly 15 integral with the rear wheel 3. Obviously, a drive chain 15 of the motion is conventionally extended and engaged between the crankset 8 and rear sprockets 15 when the bicycle 100 is configured to be operated by a cyclist. The sole purpose of this clarification is to remark that the presence of the chain is obviously essential for operating the bicycle but does not concern the structure of the accessory according to the invention that can be mounted before the chain is mounted.

More specifically, crankset 8 is of the so-called single chainring type and includes a sprocket 10 with a number of teeth 28 preferably between thirty-two and forty-four, to engage chain 15.

The rear 18 sprockets, on the other hand, comprise a plurality of sprockets that are coaxial and have different diameters and numbers of teeth.

Chain 15 is normally extended between one of the sprockets of the rear sprockets 18 and the front sprocket 10 of crankset 8.

Chain 15 actually forms a closed loop with which it engages one of the sprockets 18 of the rear sprocket assembly and the front sprocket 10 with two suspended sections 13, 14 between said sprockets 10, 18. The resulting upper section 13 of chain 15 is subjected to the pull, while the lower section 14 is slack.

Normally, there is a gearbox 24 with an articulated arm, e.g., a traditional type comprising rocker arm and cage, oscillating by elastic springing that compensates for pulling stress on the lower 14 section of the chain 15.

In general, crankset 8 has one direction of rotation of bicycle 100 forward torque transmission, which we will call in the following the forward direction, and an opposite direction of rotation without torque transmission.

Crankset 8 is conventionally configured to allow cranks 7, 9 to rotate both in the forward direction, where they transmit torque to sprocket 10, and in the reverse direction, where conversely, they do not transmit torque.

Suspension system 4 can be of any applicable type, e.g., includes suspension arms 16 articulated to each other and to the frame 5 to allow predetermined sway of the rear wheel 3 and includes means of damping 11 the sway.

During use, an H swing of the rear wheel 3 results in a swing of the rear hub 18 assembly relative to the crankset 10, and consequently a chain 15 pull.

When the rear wheel 3 swings upward due to a bump or jump, the chain 15 is subjected to a pull. This phenomenon is known as pedal kickback.

This drawback is remedied by accessory 1 according to the present invention.

Accessory 1 is structured, according to a first form of implementation, with a supporting plate 20 of essentially rectangular elongated shape.

The thickness of plate 20 can be varied between 3 and 6 mm.

At least two holes 21, 22 are provided at one long side 25 of the plate 20 for the passage of fastening means 31, 32 intended to be accommodated in corresponding receiving seats arranged around the crankset 8 of the bicycle 100.

In more detail, holes 21, 22 are slotted and accommodate fixing screws 31, 32 screwed into threaded seats 34, 36 provided around bottom bracket seat 12 in frame 5. Alternatively, holes 21, 22 can also be round if the dimensions of plate 20 are calibrated so that the distance between the holes coincides exactly with the distance between threaded seats 34, 36.

A skilled in the art understands that holes 21 and 22 can also be replaced by rounded notches open to the long side 25 of the plate so as to allow lateral insertion of the plate in case screws 31, 32 are already partially inserted into their respective seats 34, 36.

Threaded seats 34, 36 can be present in greater numbers than two around the bottom bracket seat, thus allowing the plate 20 to be oriented around the bottom bracket seat 12.

Plate 20 has the long side 25 of proximity of holes 21, 22 that is slightly curved and partially wrapping the bottom bracket seat 12 of crankset 8. Basically, plate 20 is inserted between crankset 8 and frame 5 partially wrapping the bottom bracket seat 12 of crankset 8.

There is also a pulley 30 mounted swiveling on a transverse pin 35 attached near a free end 27 of plate 20. Pulley 30 has a number of teeth less than or equal to twelve and also has a diameter smaller than that of the smallest of the sprockets 18 of the rear sprocket assembly, and of course also of the front sprocket 10.

More specifically, a second pin 38 parallel to pin 35, and extended in turn perpendicular to plate 20, is also provided for the support of a tiled lath 39 that connects the free ends of pins 35 and 38 to partially cage pulley 30.

In addition, a protection system 40 comprising two flanges 41, 42 parallel and lateral to the pulley 30 is provided to prevent a derailment of the chain 15 during the use of attachment 1.

The flanges are triangular in shape with rounded edges with relieving holes and a vertex constrained to the pulley support pin 35, each from a side to the pulley.

In an alternative form of implementation, shown as an example in Figure 4, plate 20 is structured with a pair of portions 20a and 20b mounted together with a tongue-and-groove or otherwise quick-connect coupling.

More specifically, a portion of plate 20a, which we might call the upper portion, is prepositioned to support pulley 30 as it carries the transverse pin 35 attached near the free end 27 of plate 20 on which rotatably mounted pulley 30.

On the other hand, the other portion of plate 20b, which we can call lower, is intended for binding with the bicycle and supporting the upper portion of plate 20a, which can thus be of an interchangeable type.

This upper portion of plate 20a has a lower end 43 conformed with a blade insert 44, rectangular in shape, formed of piece but less than the thickness of plate 20. This blade graft 44 has a central 45 threaded hole and is intended to be inserted into a liner 46 provided at a free end 47 of the other portion of plate 20b. The coupling between blade insert 44 and liner 46 is basically of the tenon and mortise type.

The free end 47 of plate portion 20b is affected by a central 48 through-hole, with a flared edge, that collides and is coaxial with the central 45 threaded hole of the blade 44 graft when the latter is inserted concealedly into the liner 46 fitting the two plate portions 20a and 20b together.

An Allen-headed screw 49 has a stubby stem threaded and engaged in the threading of the central hole 45 of the blade coupling thus binding together the two portions of plate 20a and 20b to form plate 20. Screw 49 has its head concealedly inserted into the countersink of the central through-hole 48.

Advantageously, the coupling between the two portions of plate 20a and 20b is made so that there is no thickness mismatch in plate 20 so structured.

However, in an alternative form of implementation, a coupling and binding between the two portions of plate 20a and 20b can be provided so that there is a different plane of lay between them if the thing can be of some use for the bicycle model for which the accessory is intended.

A skilled in the art may understand that an alternative mode of restraint may be provided to couple the two portions of plate 20a and 20b to form plate 20. For example, as an alternative to a tenon-and-mortise coupling, an overlap can be provided between two stepped portions equal in thickness to half the thickness of plate 20 and made at the lower 43 end of the upper portion of plate 20a and the free 47 end of the lower portion of plate 20b, respectively, if the same plane of layup is to be maintained between the two portions.

In this case, a threaded through-hole can be provided in each step for inserting, for example, a threaded grub screw.

In any case, having made plate 20 in two portions makes it possible to make accessory 1 of the present invention of a nearly universal type, in the sense that it can be used for essentially any type or brand of bicycle by arranging portions of plate type 20a of such shape and size that it can be compatible with different models of different makes of bicycle.

In this context, it should be noted that the upper plate portion 20a may also have an arcuate shape or otherwise longitudinal axis that is not aligned with that of the other plate portion 20b, depending on the need for adaptation to the bicycle model on which the accessory 1 is mounted. Indeed, the entire plate 20 may present as a whole an arcuate shape with a first portion 20b of the plate partially enveloping the bottom bracket 12 and a second portion of the plate 20a that is itself arcuate in extension of the first portion 20b. This possible configuration was not shown in the drawings.

In essence, plate portion 20b performs the function of constraint support to the bicycle around the bottom bracket seat 12 while plate portion 20a, engaged and constrained to the other portion 20b, is protruded for an overhang section that is compatible with the bicycle model on which attachment 1 is mounted.

In fact, when plate 20 is mounted on bicycle 100 the free end 27 of plate 20 is cantilevered to a direction where pulley 30 is engageable in chain 15 which is freely engageable on pulley 30.

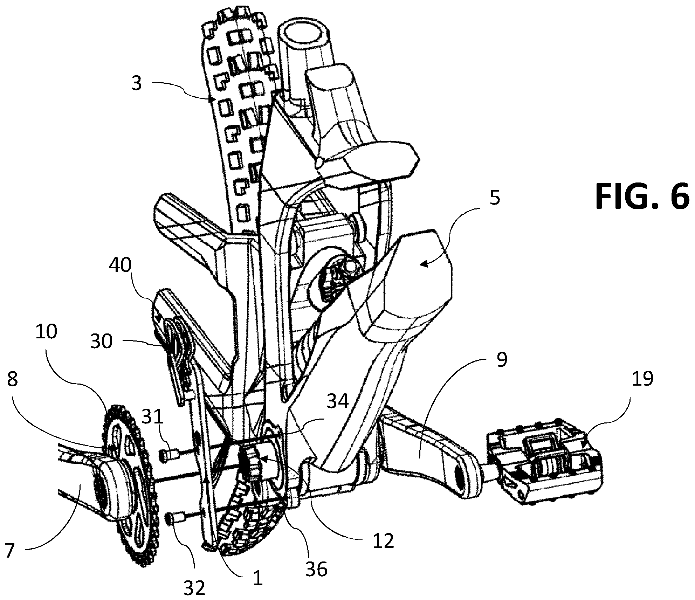

In the example implementation described here for illustrative and nonlimiting purposes, plate 20 is constrained by means of fasteners 31, 32 around bottom bracket seat 12 so that it is projecting upward and toward the rear sprocket set 18, as shown for example in Figure 6.

However, there is nothing to prevent the 20 plate from being shaped differently and providing a portion of the end 27 projecting in a different direction, for example, still upward but toward the front wheel 2 instead of toward the rear 18 sprockets.

Of course, depending on the case, the conformation of the upper portion of plate 20a can be selected according to the bicycle model to allow the best arrangement of pulley 30 for the purpose of compensating the phenomenon of kickback at the pedal. The deflection on the pulley 30 and the widening of the closed loop of the chain, due to the presence of the accessory 1 according to the invention, enables compensation of the phenomenon of kickback at the pedals. In fact, in cases where, when braking or when the bike comes into contact with rough terrain, the rear shock 11 compresses and the distance between the bottom bracket and the sprocket pack increases the presence of the small pulley 30 allows for compensation for the tension to which the chain is subjected

It will be clear to the skilled in the art that modifications and variations may be made to the accessory according to the present invention all within the scope of the appended claims.

For example, nothing prevents the support plate from projecting toward the upper portion of the bicycle.

## Claims

1. A removable accessory (1) for lowering or reducing pedal kickback or "pedal kickback" in MTB bicycles (100) comprising at least a frame (5), two wheels, one front (2) and one rear (3), a rear wheel suspension (4) a crankset (8) with at least one front sprocket (10) and a rear sprocket set (18) to accommodate a chain (15) drive between the front sprocket (10) and at least one of said rear sprockets (18), said accessory (1) comprising:
- a support plate (20) having, at one of its long sides (25), at least two holes (21, 22) or notches for the passage of means of attachment (31, 32) in corresponding receiving seats arranged around the crankset (8) of the bicycle (100);
- a pulley (30) rotatably mounted on a transverse pin (35) attached near a free end (27) of the plate (20); **characterized by** the fact that
- said free end (27) is cantilevered upward in a direction where the pulley is engaged in the chain (15) when the plate is mounted on the bicycle and essentially widening the closed ring of the chain.

2. Removable accessory according to claim 1, **characterized by** the fact that the plate (20) has the long side (25) of proximity to the holes (21, 22) slightly curved and is inserted between crankset (8) and frame (5) partially wrapped around the bottom bracket seat (12) of crankset (8).

3. Removable accessory according to claim 1, **characterized by** the fact that said holes (21, 22) are slotted.

4. Removable accessory according to claim 1, **characterized by** comprising a protective system (40) comprising two flanges (41, 42) parallel and lateral to the pulley (30) to prevent a derailment of the chain (15) during use of the accessory (1).

5. Removable accessory according to claim 1, **characterized by** the fact that said plate (20) is structured with two portions (20a, 20b) mounted together with a quick-fit coupling of the tenon and mortise type.

6. Removable accessory according to claim 5, **characterized in that** one (20a) of said portions bears the transverse pin (35) attached near the free end (27) of the plate on which mounted revolving said pulley (30).

7. Removable accessory according to claim 5, **characterized by** comprising at least one means of attachment to stably bind said portions (20a, 20b) of plate (20) together.

8. Removable accessory according to claim 1, **characterized by** the fact that said pulley (30) has a number of teeth less than or equal to twelve.

9. Removable accessory according to claim 1, **characterized by** the fact that the thickness of said plate (20) is between three and six millimeters.

10. MTB bicycle for Enduro with dual suspension **characterized by** including an accessory according to any of claims 1 to 9.
